# DEMANDE DE BREVET EUROPEEN

(11) **EP 3 747 964 A1**
(43) Date de publication de la demande: **09.12.2020**
(21) Numéro de dépôt: 20178312.3
(22) Date de dépôt: 04.06.2020
(51) Int. Cl.: C09D 15/00, C09D 17/00, B27K 5/02, C09D 7/41, C09D 7/61, C09B 67/22

(54) **COMPOSITION COLORANTE NOIRE**

(30) Priorité: 07.06.2019 BE 201905368
(71) Demandeur: Stiernon Robert ETS société anonyme, 7822 Ghislenghien (BE)
(72) Inventeur: STIERNON, Pierre, 1380 Lasne (BE)
(74) Mandataire: Office Kirkpatrick

(57) **Abrégé**

La présente demande concerne le domaine de la coloration en noire de matériaux fabriqués à base de bois, comme des panneaux de bois reconstitués ou du papier / carton. La composition colorante noire pour matériaux à base de bois comprend un pigment noir, un colorant noir de type réactif et de l'eau. Il est également possible d'en préparer un extrait sec pour certaines application particulières.

## Description

La présente demande concerne le domaine de la coloration en noire de matériaux fabriqués à base de bois, comme des panneaux de bois reconstitués ou du papier.

Le domaine de la construction, et en particulier de l'aménagement intérieur de locaux commerciaux ou d'habitation, fait extensivement usage de panneaux en bois dits « reconstitués », comme par exemple des panneaux en MDF (Médium Density Fiber ou panneau de fibres à densité moyenne) . De plus en plus, ces panneaux sont proposés avec des couleurs variées. Des panneaux noirs sont de plus en plus utilisés par exemple pour habiller les plafonds des surfaces commerciales, disposés éventuellement de façon à amortir les bruits et l'effet de résonnance.
La coloration de tels panneaux se fait industriellement lors de la fabrication du panneau lui-même. Un colorant est ajouté lors du mélange des particules de bois et du liant, par exemple une résine synthétique. On obtient une coloration « dans la masse » et non pas simplement en surface du panneau, comme le serait une peinture.

Il est particulièrement difficile d'obtenir des panneaux d'un noir soutenu. Pour ce faire, les industriels utilisent un mélange colorant combinant un pigment (substance non soluble dans le mélange qu'elle colore) et un colorant (soluble dans le mélange qu'il colore. Le pigment est généralement du noir de carbone (carbon black), qui a l'avantage d'être bon marché et de conférer une force colorante importante. Le colorant est généralement de la nigrosine (Acid Black 2 ; C.I. 50420) qui désigne une famille de colorants de type « acide » conférant une nuance noire bleutée. La forme sulfonée de la nigrosine, soluble dans l'eau, est principalement utilisée.
Le pigment étant insoluble dans le milieu aqueux dans lequel est dissout le colorant, une telle composition colorante est une suspension, qui a fortement tendance à se décanter au repos et doit être agitée juste avant son utilisation. Cela ajoute une étape au procédé industriel de coloration de panneaux de bois.

Cette combinaison donne de bons résultats de coloration des panneaux de bois, malgré l'hétérogénéité au cours du processus de fabrication des panneaux de la base de bois utilisée, qui dépend notamment de la variété des arbres et de leur âge, ainsi que de la variabilité de composition des liants selon les lots produits.

La nigrosine est fabriquée en chauffant un mélange de nitrobenzène, d'aniline, et d'acide chlorhydrique en présence de cuivre ou de fer. Le procédé de synthèse n'est pas conforme aux exigences environnementales croissantes, et une rupture des voies d'approvisionnement est à prévoir dans les années qui viennent.

La demanderesse a donc jugé nécessaire de proposer une nouvelle composition colorante ne comprenant pas de nigrosine mais permettant un rendu noir d'excellente qualité des panneaux de bois incorporant cette composition.

### Solution de l'invention

La présente invention propose, à cet effet, une composition colorante noire pour matériaux à base de bois, comprenant :
- Un pigment noir,
- Un colorant noir de type réactif et
- de l'eau.

Le pigment noir est de préférence du noir de carbone de type Pigment Black 7.
Le pigment noir représente de préférence entre 4 et 10% en masse de la composition colorante.

De préférence, le colorant de type réactif comprend le composé usuellement dénommé Reactive Black 5 (CAS No : 17095-24-8).
Le colorant de type réactif représente de préférence entre 10 et 20% en masse de la composition colorante.

Le colorant de type réactif peut être un mélange de colorants, et contenir un ou plusieurs autres colorants de type réactifs, comme les composants usuellement dénommés Reactive Red ou Reactive Orange, ou tout autre colorant de la même famille pour faire varier la nuance de noir.

La composition colorante selon l'invention est de préférence dénuée de nigrosine et de préférence dénuée de colorant de type acide. La nigrosine désigne ici toutes les formes chimiques de la famille de colorants couverte par le terme nigrosine.

Toutefois, pour certaines applications, la composition colorante peut être adaptée, par ajout d'un additif, pour être compatible avec la nigrosine, c'est-à-dire ne pas réagir chimiquement avec la nigrosine. Cela peut présenter un intérêt pour des chaines industrielles utilisant aussi bien des compositions selon l'invention que des compositions de l'art antérieur à base de nigrosine.

Par matériaux à base de bois, il faut entendre des matériaux dont le constituant principale est du bois, sous forme de particules ou de fibres. Il s'agit par exemple de bois aggloméré aussi appelé aggloméré de bois ou tout simplement aggloméré, qui désigne tout bois d'ingénierie fabriqué à partir de fibres ou de particules de bois que l'on a agglomérées à l'aide d'un liant, sous pression et de préférence soumis à un traitement thermique, notamment pour sécher le produit fini, c'est-à-dire en évaporer les solvants qui peuvent être présent dans le liant ou dans le colorant, par exemple de l'eau.
L'aggloméré se présente par exemple sous forme de panneau de particules de bois, de panneau de fibres à densité moyenne (ou MDF), ou de panneau de grandes particules orientées (ou OSB).
Le terme matériau à base de bois peut également désigner les produits fabriqués à partir de pâte à papier, elle-même fabriquée à partir des fibres cellulosiques du bois. De tels matériaux sont par exemple du papier ou du carton.

Par noir, il est ici fait référence à la perception visuelle d'un œil humain. L'œil humain perçoit comme noir les objets de reflétant aucune ou très peu de longueurs d'onde visible. D'un point de vue purement scientifique, noir au sens de l'invention peut s'étendre à d'autres couleurs très foncées proches du noir absolu, comme par exemple du marron, bleu marine... L'invention couvre tout produit qui pourrait être commercialisé sous l'appellation « noir ». En terme de caractérisation, noir au sens de l'invention peut par exemple désigner une couleur définie dans l'espace chromatique L*a*b* CIE 1976, par une valeur de clarté L < 30%, les termes A* et b* pouvant être non nuls.

L'invention est donc également relative à l'utilisation de la composition colorante noire pour colorer dans la masse des matériaux à base de bois, comme du bois aggloméré éventuellement sous forme de panneaux, ou de la pâte à papier, du papier ou du carton.
Pour certaines application comme par exemple la coloration du papier, il est également possible d'utiliser un extrait sec de la composition colorante, c'est-à-dire un extrait colorant sec noir comprenant un pigment noir et un colorant noir de type réactif, tels que définis plus haut. Les proportions entre les deux composants sont les mêmes que pour la composition colorante selon l'invention, une fois l'eau retirée. L'extrait sec est d'ailleurs de préférence produit par évaporation à sec de la composition colorante. L'extrait sec selon l'invention peut contenir les mêmes additifs, les mêmes mélanges de colorants que la composition colorante décrite plus haut.

Les colorants sont classifiés d'après leur structure chimique, principalement sur la nature du chromophore, qui constitue le squelette nécessaire à la coloration de la molécule. Au chromophore sont associés des groupements ionisables dits « auxochormes » de types amine(-NH2), hydroxyde (-OH), acide (-COOH), sulfonates (-SO3H), halogènes (-Cl, -Br,...), etc..., permettant d'assurer la solubilité dans l'eau de la molécule, mais aussi de créer une liaison plus ou moins solide entre le colorant et le substrat à colorer. Les colorants utilisés en milieu basique ou alcalins sont appelés colorants réactifs et sont plutôt utilisés dans l'industrie textile pour les bains de coloration, et en particulier pour teindre le coton. Des exemples de colorants réactifs sont les colorants de la famille « Reactive Black 5 » (CAS No 17095-248) dont les esters de vinylsulfone peuvent éventuellement être substituées par un groupement sulfonate. Ces colorants noirs réactifs ont une nuance bleue et sont généralement appelés noir-bleuté ou noir-bleu.

Pour la coloration des matériaux à base de bois, il est généralement accepté dans la profession qu'un colorant de type « acide », dont fait partie la nigrosine, est nécessaire pour obtenir une liaison covalente avec les fibres du bois et assurer une coloration stable et forte.

La demanderesse a donc été à l'encontre de l'acceptation générale de la profession en proposant, pour teinter des matériaux à base de bois, une composition colorante comprenant, non pas un colorant de type acide, mais un colorant de type réactif.

Les colorants de type réactifs n'avaient jusqu'alors jamais été combinés avec du noir de carbone. En préparant les compositions colorantes selon l'invention, la demanderesse a pu observer que, de façon surprenante, le noir de carbone ne se décantait pas et restait en suspension dans le mélange colorant, de façon homogène, ce qui présente en sus un avantage industriel incontestable. En effet, cette propriété permet d'éliminer l'étape préalable d'agitation de la composition colorante servant à remettre en suspension le noir de carbone dans les compositions à base de nigrosine. Cela permet notamment de diminuer les coûts de production des matériaux à base de bois en libérant de l'espace dans les facilités de production et en économisant du temps et de l'énergie dans la chaine de production.

L'invention sera mieux comprise à l'aide de la description suivante de plusieurs mises en œuvre de l'invention.

Les pourcentages exprimés ci-après sont par défaut des pourcentages massiques, tels qu'usuellement utilisés dans le domaine technique des compositions colorantes.
une composition colorante pour matériaux à base de bois peut être préparée en mélangeant
- un pigment noir,
- Un colorant de type réactif et
- de l'eau.

Le pigment noir peut être du noir de carbone de type Pigment Black 7 (tel que défini au Color Index bien connu de l'homme du métier) qui peut être fourni sous forme de poudre ou sous forme de dispersion dans une solution aqueuse, contenant éventuellement des additifs. De préférence la dispersion comprend au moins 40% de contenu solide, de préférence encore au moins 45% de contenu solide. Elle est fournie sous forme d'une pate visqueuse, de viscosité par exemple comprise entre 100 et 800 cps, et ayant un pH basique, de préférence supérieur à 8. Les particules ont de préférence une granulométrie inférieure à 1 µm, et de préférence entre 3 et 500 nm, et de préférence encore entre 100 et 200 nm. Les particules très fines sont très chères, les particules trop grosses diminuent la stabilité du produit.
Les additifs éventuellement présents, pour garantir notamment la stabilité du pH, peuvent être par exemple de l'ammoniaque ou des dérivés de la 2-méthyl-2H-isothiazol-3-one.De telles dispersions de pigments sont par exemple vendues par KEMITEKS sous la référence PIGMACOLOR BLACK KBF. Ces additifs se retrouvent dans la composition colorante finale.

Le colorant de type réactif peut être un colorant ou un mélange de colorants réactifs comprenant du « Reactive Black 5 » (CAS No 17095-248, tetrasodium 4-amino-5-hydroxy-3,6-bis[[4-(2-sulfonatooxyethylsulfonyl)phenyl]azo]naphthalene-2,7-disulfonate), dont les esters de vinylsulfone peuvet éventuellement être substitués par un groupement sulfonate, comme illustrés ci-après par les dérivés I, II, III et IV obtenus par la copulation de 3-sulphonyl-4-aminophenyl-beta-hydroxy ethylsulphone sulphate ester ou « sulfo para base » (CAS N°: 42986-22-1) et/ou vinyl sulfone ester (CAS N° : 2494-89-5 ; 4-((2-sulfatoethyl)sulfonyl)aniline) sur l'acide H (CAS No 5460-09-3 ou sodium hydrogen 4-amino-5-hydroxynaphthalene-2,7-disulfonate).

Le « Reactive Black 5 » a une nuance bleutée et est généralement appelé noir-bleuté ou noir-bleu.

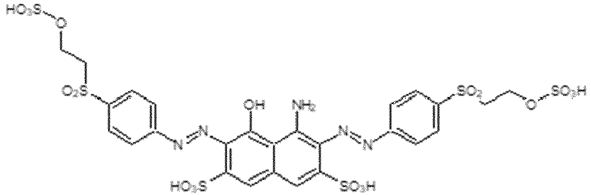

### I - tetrasodium 4-amino-5-hydroxy-3,6-bis[[4-(2-sulfonatooxyethylsulfonyl)phenyl]azo]naphthalene-2,7-disulfonate

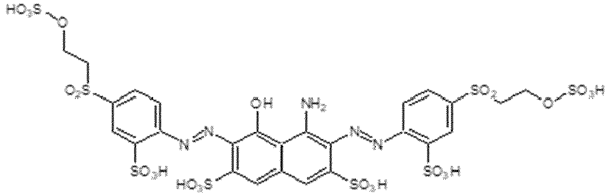

### II - TETRASODIUM 4- AMINO-5- HYDROXY-3,6-BIS {{2 - SULFO-4 {{2-(SULFOOXY) ETHYL} SULFONYL}PHENYL}AZO} NAPHTALENE 2,7 DISULFONATE

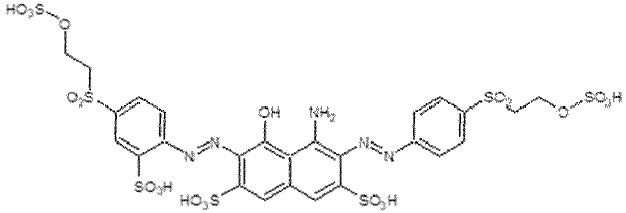

### III - TETRASODIUM 4-AMINO-5-HYDROXY-3{{2-SULFO-4-{{2-(SULFOOXY)ETHYL} SULFONYL}PHENYL}AZO}-6{{4-{{2-(SULFONATOOXY)ETHYL}SULFONYL}PHENYL}AZO}NAPHTALENE 2, 7 DISULFONATE

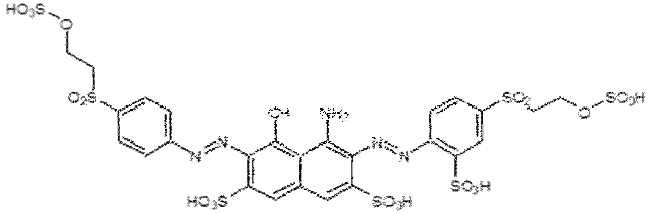

### IV - TETRASODIUM 4- AMINO-5- HYDROXY- 3 {{4{{2-(SULPHONATOOXY) ETHYL} SULFONYL} PHENYL}AZO}6{{2-SULFO-4{{2-(SULFOOXY)ETHYL}SULFONYL}PHENYL}AZO}NAPHTALENE 2,7 DISULFONATE

Le pigment noir de carbone (Pigment black 7) a une teinte noire-jaune.
On peut moduler le type de noir obtenu en combinant au pigment noir un ou plusieurs colorants noirs ayant d'autres nuances. Par exemple, en plus ou à la place du « Reactive Black 5 » conférant une nuance bleue, bleu marine, on peut utiliser du « Reactive Red » (CAS No : 607724-47-0 ; 2-Naphthalenesulfonic acid, 7-amino-4-hydroxy-3,8-bis[[4-[[2-(sulfooxy)ethyl]sulfonyl]phenyl]azo]-, trisodium salt) ajouter une nuance rouge, et/ou du « Reactive Orange » (EC No : 937-924-7 ; 1-3 dihydroxy-2,4bis-(4-(2-sulfooxyethanesulfonyl)-phenylazo) benzene disodium salt) pour conférer une teinte orangée, et/ou tout autre colorant adapté.
Le colorant principal est un colorant du type réactif, des colorants secondaires peuvent éventuellement être d'une autre famille, tant qu'ils sont chimiquement compatibles avec le colorant réactif et les matériaux à base de bois.

De préférence, le colorant de type réactif contient, comme molécule colorante, au moins 70% de Reactive Black 5, et peut contenir jusqu'à 30% d'autres types de colorants réactifs.

Ces colorants sont généralement fournis sous forme de solution aqueuse, ayant des concentrations en molécules colorantes de type réactif comprises entre 15 et 50%, de préférence entre 20 et 45% selon la solubilité des composés.

Par exemple, pour réaliser une composition colorante selon l'invention, pour 100g, on mélange :
- 57.25 g du mélange colorant vendu par l'entreprise Blendwell SA sous l'appellation « Blendazol Black CCN liq (noir profond) » consistant en:
   * 25 -30 % de Reactive Black 5
   * 3 - 5 % de Reactive Red
   * 3 - 5 % de Reactive Orange
   * 60 - 69 % d'eau
- 13.00 g d'une suspension à 47% en masse de noir de carbone dans l'eau et
- 29.75 g d'eau.

On obtient une pâte visqueuse qui est une dispersion aqueuse ayant une viscosité comprise entre 100 et 200 cps.
Ainsi, la composition contient 17.75 à 22.9 % en masse de colorant de type réactif ; 6.11% en masse de pigment noir et 70.99 à 76.14% d'eau.
Cette composition colorante est caractérisée par mesure colorimétrique, selon le système CEI L*.a*.b*bien connu de l'homme du métier. 10 g de la composition colorante obtenue sont dilués à 1 L dans de l'eau déminéralisée maintenue sous agitation. L'échantillon obtenu est ensuite dilué à 1/125 dans de l'eau déminéralisée juste avant d'être analysée en mode transmission à l'aide d'un spectro-colorimètre Datacolor, pour donner une valeur de clarté L*=64 ;a*= +2 et b*= -0.70.

De façon plus générale, le pigment noir représente de préférence entre 4 et 10% en masse de la composition colorante. Le pigment noir est relativement bon marché et confère à la composition ainsi qu'au produit fini une teinte noire intense et durable (qui ne s'altère pas dans le temps).

Le colorant de type réactif représente de préférence entre 10 et 30% en masse de la composition colorante, et de préférence encore entre 15 et 25% en masse de la composition colorante. Ce pourcentage permet, en composition avec le pigment, de conférer une nuance stable à la composition colorante, en se liant aux fibres du bois de façon permanente (covalente ou autre).

Le pourcentage de dilution de la composition selon l'invention permet d'assurer une viscosité idéale, ni trop élevée pour la manipulation de la composition lors de son utilisation, ni trop diluée afin de limiter le volume de composition nécessaire à l'effet obtenu, ce qui présente un avantage au niveau du transport et du stockage.

Des additifs peuvent éventuellement être ajoutés, à la demande de l'utilisateur pour conférer des propriétés particulières à la composition colorante, comme par exemple pour en ajuster le pH, la rendre compatible avec des substances éventuellement utilisées sur la chaine d'utilisation. Des exemples d'additifs sont la soude, l'ammoniaque, le carbonate de sodium, le bicarbonate de soude....

La demanderesse a observé avec surprise que la composition colorante obtenue est stable, c'est-à-dire qu'elle ne décante pas. Un lot de 2.2 tonnes a été produit selon la méthode ci-dessus. Une viscosité identique a été mesurée après deux semaines à la surface et au fond du conteneur de stockage, indiquant qu'il n'y a pas de différence de concentration des particules pigmentaires entre le haut et le fond de la composition, contrairement aux compositions colorantes de l'art antérieur à base de nigrosine, pour lesquelles une décantation notable est observée dès deux ou trois jours après le production.

Cet aspect représente un avantage industriel considérable. En effet, si le remplacement de la nigrosine par un colorant de type réactif n'a pas d'impact notable sur le coût de production de la composition colorante, il permet, lors de l'utilisation de la composition colorante, de s'affranchir d'une étape préliminaire de remise en suspension, c'est-à-dire d'homogénéisation, de la composition colorante. Ceci permet de réduire le coût de production du matériaux à base de bois.
On rappellera également que la synthèse des colorants de type réactifs ne fait pas appel à des réactifs ou des méthodes présentant un risque environnemental, et sont à ce titre préférables à la nigrosine, car ne présentant pas le risque de se voir interdire sur certains marchés ou territoires. En conséquence, la continuité de production peut être assurée.

L'utilisation de la composition colorante selon l'invention va à présent être décrite.

La fabrication de matériaux à base de bois, et en particulier de bois aggloméré, sous forme de plaques ou panneaux se fait généralement suivant les étapes suivantes :
- on mélange des particules de bois avec un liant et, éventuellement, des additifs et/ou colorants;
- on sèche au moins partiellement le mélange pour obtenir une poudre ;
- on dépose la poudre en une couche continue sur un tapis roulant ;
- on applique une pression sur la couche pour former une plaque;
- on chauffe pour durcir le mélange, par exemple au-dessus de 200°C pour un séchage à cœur de la plaque, et
- on découpe aux dimensions souhaitées.

L'utilisation de la composition colorante noire pour colorer dans la masse de tels matériaux à base de bois, se fait notamment par ajout de la composition colorante aux particules de bois et au liant puis homogénéisation du mélange, avant mise en forme du matériaux.

Par exemple, pour fabriquer une plaque de bois de type MDF, on peut introduire 5 à 15% en masse de la composition colorante selon l'invention, selon la profondeur de couleur souhaitée.

Une plaque de MDF a été colorée dans la masse avec 5 à 15% de la composition colorante décrite plus haut. Elle a été caractérisée dans l'espace CIELAB par une valeur de clarté L*= 33 ; a*= -0.05 ; b*= 0.50 . Pour comparaison, une plaque similaire colorée avec une composition à base de nigrosine a une valeur L* de 33.

Le traitement implique que le pigment et le colorant de la composition colorante ne se dégradent pas à la chaleur. Le traitement thermique va, par ailleurs, induire l'évaporation de l'eau, au moins en partie.

Les entreprises fabricant de tels matériaux à base de bois reçoivent des lots de bois de nature et de qualité très variées. De même, le liant utilisé n'est pas toujours le même, sa nature et sa qualité peuvent également dépendre de la source d'approvisionnement. Un aspect important de la composition colorante selon l'invention est d'assurer la même qualité de coloration, quelle que soit la qualité du bois et du liant utilisés pour former le panneau de bois. Cela est assuré par la combinaison du pigment et du colorant de type réactif qui combinent leurs qualités et nuances colorantes pour assurer un rendu constant à composition colorante constante.

Un autre exemple d'utilisation de la composition colorante selon l'invention est pour colorer du papier ou du carton. La préparation de la pâte à papier/carton se fait dans de grands lessiveurs, à température élevée 100 à 175 °C pour extraire les fibres du bois, qui sont ensuite lavées et rincées. Une composition colorante selon l'invention peut ensuite être mélangée aux fibres, avant leur mise en forme et séchage pour obtenir du papier.
La quantité et la nuance de la composition colorante selon l'invention peut être ajustée, dans les limites définies plus haut, en fonction de la qualité du papier/carton et de la nuance requises.

## Revendications

1. Composition colorante noire pour matériaux à base de bois, comprenant :
- Un pigment noir,
- Un colorant noir de type réactif et
- de l'eau.

2. Composition colorante selon la revendication 1, dans laquelle le pigment noir est du noir de carbone.

3. Composition colorante selon l'une des revendications 1 et 2, dans laquelle le pigment noir représente entre 4 et 10% en masse de la composition colorante.

4. Composition colorante selon l'une des revendications 1 à 3, dans laquelle, le colorant de type réactif comprend le composé Reactive Black 5.

5. Composition colorante selon l'une des revendications 1 à 4, dans laquelle le colorant de type réactif représente entre 10 et 20% en masse de la composition colorante.

6. Composition colorante selon l'une des revendications 1 à 5, dans laquelle le colorant de type réactif est un mélange de colorants comprenant au moins un colorant de type réactif.

7. Composition colorante selon l'une des revendications 1 à 6 dénuée de nigrosine.

8. Extrait colorant sec noir comprenant un pigment noir et un colorant noir de type réactif.

9. Extrait colorant sec noir selon la revendication 8 obtenu par évaporation à sec de la composition colorante de l'une des revendications 1 à 7.

10. Utilisation de la composition colorante noire selon l'une des revendications 1 à 7 ou de l'extrait colorant sec noir selon l'une des revendications 8 et 9 pour colorer dans la masse des matériaux à base de bois.

11. Utilisation selon la revendication 10, où le matériau à base de bois est un panneau de bois aggloméré.

12. Utilisation selon la revendication 10, où le matériau à base de bois est de la pâte à papier, du papier ou du carton.
